# EUROPEAN PATENT SPECIFICATION

(11) **EP 3 712 285 B1**
(45) Date of publication and mention of the grant of the patent: **06.10.2021**
(21) Application number: 18793447.6
(22) Date of filing: 03.08.2018
(51) Int. Cl.: C22C 38/00, C22C 38/02, C22C 38/04, C22C 38/06, C22C 38/42, C22C 38/50, C22C 38/54, C22C 38/60, C21D 6/00, C21D 9/00, C21D 1/22, C21D 1/25

(54) **ALLOY STEEL AND QUENCHED AND TEMPERED STEEL**
LEGIERTER STAHL UND VERGÜTUNGSSTAHL
ACIER ALLIÉ ET ACIER TREMPÉ ET REVENU

(30) Priority: 15.11.2017 WO PCT/ES2017/070754
(43) Date of publication of application: 23.09.2020
(73) Proprietor: Sidenor Investigación y Desarrollo, S.A., 48970 Elexalde-Basauri (Bizkaia) (ES)
(72) Inventor: HERRERO VILLALIBRE, Diego, 48970 ELEXALDE-BASAURI (Bizkaia) (ES); ALBARRAN SANZ, Jacinto, 48970 ELEXALDE-BASAURI (Bizkaia) (ES); LARAUDOGOITIA ELORTEGUI, Juan, José, 48970 ELEXALDE-BASAURI (Bizkaia) (ES)
(74) Representative: Herrero & Asociados, S.L.
(86) International application number: PCT/ES2018/070543
(87) International publication number: WO 2019/097096

(56) References cited:
- JP-A- H07 310 118
- US-A- 5 525 167
- US-A1- 2005 217 763
- US-A1- 2012 134 872

## Description

### Object of the Invention

The present invention relates to an alloyed steel and to the quenched and tempered steel produced from it that allows achieving high fatigue strength and high low-temperature toughness in parts having large dimensions and with an alloy content that is clearly lower than that found in conventional steels.

The parts produced with said steel will primarily be used in the field of construction, where it is particularly suitable for applications exposed to extremely low temperatures, as in the case of the different fasteners present in wind turbine towers, oil rigs, etc.

### Background of the Invention

In the field of metallurgy, and more specifically in the case of steels, the industrial use of elements or parts requires the mechanical properties of the steel to reach minimum values that assure the proper operation thereof.

For a steel to reach given mechanical properties, in addition to carefully selecting its chemical composition, it is necessary to perform heat treatments which allow modifying the crystalline structure of the steel without altering its chemical composition. This makes it possible to classify steels according to their crystalline structure, and therefore according to the heat treatment they receive. One of the groups of this classification is the one formed by steels known as quenched and tempered steels.

These quenched and tempered steels are commonly used in manufacturing high responsibility mechanical parts and elements, i.e., those which are subjected to loads in a working situation, therefore a failure during their service life is inadmissible.

The main mechanical characteristics that parts of this type must have are high mechanical strength, an optimal ratio between the yield strength and the mechanical strength and high toughness. In certain uses, said toughness must be assured at extremely low temperatures. In addition to the foregoing, in the case of applications in which cyclical loads are withstood, high fatigue strength must be assured.

The high levels of mechanical strength that quenched and tempered steels must achieve are obtained with a carbon content ranging between 0.20% and 0.50% by weight. The increase in carbon content in the steel causes an increase in its mechanical strength; however, it also involves a reduction in the toughness and ductility thereof. In order to find a balance between the mechanical strength and the toughness of the steel, it is necessary to add other alloying elements, such as Mn, Ni, Cr, Mo, B or V. The effect that each of them has on the response of the steel to heat treatments and on the main mechanical properties is known by metallurgical experts.

Among the different applications of quenched and tempered steels is the field of wind power, more specifically the field dedicated to manufacturing different foundation elements of wind-driven power generators or fasteners used for attaching different parts of wind turbine towers (screws, bolts, etc.). In that scope, considering the service conditions of the aforementioned elements and parts, it is fundamental for steels to have very high strength and low-temperature toughness values. The ISO 898-1 standard establishes that at least 27 J of toughness at -40°C must be assured.

### Quench and tempering

Quenching is a heat treatment the purpose of which is to harden steels and increase their mechanical strength.

Quenching heat treatment consists of heating a steel to a temperature above its transformation point (Ac₃), also referred to as its highest critical temperature, which depends on the chemical composition of the steel and can be between 800°C and 1100°C, all of which is for the purpose of achieving an austenitic crystalline structure (γ). Then rapid cooling is performed at a rate that exceeds the critical rate for the purpose of producing a martensitic crystalline structure.

The quenching thereby transforms austenite (γ) into high-strength martensite. The hardness of said martensite is conditioned only by the C content, whereas the capacity of quenching the entire section of parts having large dimensions is determined by the alloy content of the steel (the content of elements which increase the steel hardenability such as Mn, Cr, Ni, etc.) and by the rate of cooling of the part.

Once quenching has been performed, it is very common to subject the steel to a tempering heat treatment in order to attenuate the effects and mechanical properties obtained in the quenching . The hardness and strength values achieved in the quenching are thereby maintained, at least for the most part, and at the same time the toughness and elasticity of the steel are thereby increased. So steels having an optimal combination of mechanical strength, elongation and yield strength are produced, with steels having a yield strength value that even exceeds 90% of the value of the fracture load being produced. The yield strength achieved in steels after the quench and tempering heat treatment is clearly higher than the yield strength achieved after other heat treatments (such as normalizing or annealing treatments).

Tempering is a heat treatment that consists of heating to a temperature of between 350 and 650°C, which is less than the austenite transformation initiation temperature. During this process, the carbon contained in the martensite precipitates into carbides, whereas the martensite transforms into extremely small particles of cementite dispersed in a ferrite matrix (α), whereby eliminating the stresses created in the sudden cooling taking place during the quenching treatment.

### Current situation

Today there is a tendency to build wind turbine towers having increasingly larger dimensions, which allows the use of more powerful turbines. This makes it necessary to modify the characteristics of the fasteners so as to assure that they are capable of withstanding the loads to which they are subjected. The two main alternatives existing today for adapting said fastening elements to a larger sized tower are: improving their mechanical properties and/or increasing their dimensions.

The mechanical characteristics that the fasteners must comply with are determined in the ISO 898-1 standard relating to bolts, screws and studs, where those in class 10.9 bolts, screws and studs are the most common (see Table 1). The first of the two alternatives which is based on improving the properties of the fasteners, consists of using fastening elements with which the requirements specified for class 12.9 bolts, screws and studs (see Table 1) are met instead of complying with the characteristics of said class 10.9 bolts, screws and studs.

**Table 1. Mechanical properties required for class 10.9 and class 12.9 bolts, screws and studs in the ISO 898-1 standard.**

| Property | Class 10.9 | Class 12.9 |
|---|---|---|
| Rm (MPa) | > 1040 | > 1240 |
| Re_{0.2%} (MPa) | > 940 | > 1100 |
| A (%) | > 9 | > 8 |
| Z (%) | > 48 | > 44 |
| KV at -40°C (J) | > 27 | > 27 |
| % martensite in the center of the part | > 90 | > 90 |

In addition to all the requirements established by the ISO 898-1 standard, it must also be taken into consideration that the costs derived from the maintenance of said wind turbine towers are very high given that they are usually installed in very hard-to-access places where weather conditions are very adverse. As a result, the fatigue behavior of the components of the tower must be taken into account, since the improvement thereof leads directly to a reduction of the number of maintenance interventions, and accordingly, a drop in associated costs.

The second alternative, which is based on the increase in the dimensions of the fasteners, is more widely used today. However, meeting the requirements mentioned above in parts or elements having large dimensions entails the use of steels with a high content of alloying elements that improve hardenability, as in the case of Cr, Mn, Ni, Mo, V or B.

The steels that are normally used today in the field of wind turbine towers for manufacturing parts or elements having small dimensions (diameters less than 45 mm) are 33MnBCr6 and 32CrB4, both of which are standard steels the chemical compositions of which are specified in standards EN 10263-4 and EN 10083-3, respectively. In the case of largersized parts or elements (diameters greater than 45 mm), to enable assuring that the required mechanical properties are achieved, more alloyed steels, such as 42CrMo4 and the 34CrNiMo6, the chemical compositions of which are described in EN 10083-1 standard, must be used. This higher content of alloying elements causes a substantial increase in the price of said steels.

In the same sense as these two latter cases, steels that have been recently developed, though not specifically for the applications mentioned above, are also based on a significant increase of the alloy for the purpose of achieving high mechanical strength and low-temperature toughness values.

Japanese patent document JP20100054648 discloses a wire rod of high toughness steel with a tensile strength of 1300 MPa or more, the composition of said steel consists of the following % by weight: C: 0.10-0.55%, Si: 0.01-3.00% and Mn: 0.10-2.00%, further containing one or more of Cr: 0.05-1.50%, V: 0.05-0.20%, Mo: 0.05-0.40%, Cu: 0.01-4.00%, Ni: 0.01-4.00% and B: 3-100 ppm.

US patent document no. US19900475773 describes a steel alloy with high toughness and mechanical strength essentially consisting of the following chemical composition by weight: C: 0.20-0.33%, Cr: 2.00-4.00%, Ni: 10.5-15.0%, Mo: 0.75-1.75% and Co: 8.00-17.00%.

Although US patent document no. US19970053916P discloses a lower alloy steel than the aforementioned ones, the requirements established for use of this steel in wind turbine tower fasteners and foundations are not met. This patent describes a steel containing B and having a strength of at least 900 MPa and a toughness at -40°C of more than 120 J and a microstructure comprising at least 50% by volume of fine-grained lower bainite.

US2005217763 A1 discloses quenched and tempered steel wire useful in making bolts and shafts.

The high content of alloying elements in parts having large dimensions which is required for achieving the minimum mechanical characteristics required by the ISO 898-1 standard means that the chemical composition of steels intended for the aforementioned applications can be optimized.

### Description of the Invention

The present invention relates to a steel with an innovative content of alloy elements (CrNiB). Said quenched and tempered alloyed steel allows attaining in large-sized parts an optimal combination of two opposing mechanical properties, high mechanical strength and high low-temperature toughness, with values of KV impact strength at -40°C greater than 27 J. Furthermore, a high fatigue limit is attained.

Despite having a lower content of alloying elements, the developed alloyed steel allows attaining after the quench and tempering treatment the characteristics of the class 10.9 and class 12.9 bolts, screws and studs specified in the ISO 898-1 standard in elements or parts up to 75 mm in diameter.

When the quenched and tempered steel is used to manufacture parts or elements having large dimensions, the invention allows obtaining mechanical properties similar to those which are achieved with commonly used steels (42CrMo4 or 34CrNiMo6), but with a considerably lower alloy content, which allows significantly reducing the cost of the steel. The quenched and tempered steel of the invention also improves the fatigue behavior of 42CrMo4, where it is similar to the fatigue behavior of 34CrNiMo6.

The research that has been conducted result in a new alloyed steel grade for CrNiB consisting of the following chemical composition in percentage by weight:
0.25% ≤ C ≤ 0.35%
0.80% ≤ Cr ≤ 1.50%
0.50% ≤ Ni ≤ 1.50%
0.0010% ≤ B ≤ 0.0050%
0.010% ≤ Ti ≤ 0.060%
0.40 ≤ Mn ≤ 1.00%
0.0030% ≤ N ≤ 0.0150%
balanced with Fe, the remaining elements being impurities resulting from the production thereof.

These elements are used in alloyed steels to improve mechanical strength, toughness or other characteristics of the steel, but not at the concentrations by weight indicated above, with the proposed combination of elements, or for obtaining the properties described above that allow the use thereof in the mentioned applications.

Each of the alloying elements in the proportions indicated above has an effect on certain parameters and properties of the quenched and tempered steel that is finally produced.

The use of a chromium content of 0.80-1.50% allows a pronounced shift of the TTT, Temperature-Time-Transformation, diagram curves to the right, whereby largely increasing hardenability in a less expensive manner than with other elements, as in the case of the steels used today.

Nickel is a moderate agent which favors hardenability and allows reducing the tendency to crack during quenching. In a range of 0.50-1.50%, nickel allows producing a fine grain, achieving higher toughness, particularly at low temperatures.

A boron content of 0.0010-0.0050% allows considerably delaying the occurrence of ferrite, but without lowering the temperature at which the martensitic transformation takes place.

At concentrations of 0.010-0.060%, titanium promotes the production of fine grain, favoring good toughness.

At a concentration of 0.30-1.00%, manganese increases hardenability and reduces the transformation temperature, a fine-grained crystalline structure which allows increasing mechanical strength and at the same time improving toughness being produced.

Finally, nitrogen content of 0.0030-0.0150% is required to form titanium or aluminum nitrides, preventing the formation of boron nitrides.

The alloyed steel proposed by the invention optionally has at least one of the following elements or a combination thereof, in percentage by weight:
Si ≤ 0.30%
P ≤ 0.025%
S ≤ 0.025%
Cu ≤ 0.35%
Al ≤ 0.050%
Ca ≤ 0.0050%
Bi ≤ 0.10%
Pb ≤ 0.20%
Te ≤ 0.020%
Se ≤ 0.040%

It is well known that the presence of phosphorus and sulfur is generally detrimental for applications requiring high toughness, since they reduce the elongation and strength of the steel. Therefore, in the case of the aforementioned applications, the content of these two elements should be reduced as much as possible, where it is recommended that the content of each of them should not exceed 0.015%.

Therefore, the alloyed steel of the invention optionally shows in the impurities less than 0.016% of phosphorus and less than 0.016% of sulfur.

A preferred composition of the steel proposed by the invention has the following percentage by weight:
0.30% ≤ C ≤ 0.35%
0.80% ≤ Cr ≤ 1.30%
0.50% ≤ Ni ≤ 1.10%
0.0020% ≤ B ≤ 0.0050%
0.010% ≤ Ti ≤ 0.040%
0.40 ≤ Mn ≤ 1.00%
0.0030% ≤ N ≤ 0.0100%

Furthermore, the alloyed steel preferably has at least one of the following elements in percentage by weight:
P ≤ 0.015%
S ≤ 0.015%
Cu ≤ 0.25%
Al ≤ 0.030%

After conducting several experimental tests, it has been found that with the chemical composition indicated above, by adjusting the quench and tempering temperatures and times, a steel capable of complying with the requirements for class 10.9 and class 12.9 bolts, screws and studs, established by the ISO 898-1 standard, in parts or elements up to 75 mm in diameter is attained.

Therefore, a second aspect of the invention relates to a quenched and tempered steel produced from the alloyed steel of the invention which, depending on the requirements of the part in which it is used, can attain:
- a mechanical strength equal to or greater than 1040 MPa, a toughness at -40°C equal to or greater than 27 J and a fatigue strength equal to or greater than 520 MPa, or
- a mechanical strength equal to or greater than 1240 MPa, a toughness at -40°C equal to or greater than 27 J and a fatigue strength equal to or greater than 610 MPa.

The method of this heat treatment consists of a quenching step performed at an austenization temperature greater than 800°C, followed by cooling in an oil or water bath. Tempering is carried out at a temperature greater than 400°C. The hardness of the material is thereby adjusted and drops in impact strength which are associated with the phenomenon of tempering fragility are thereby prevented.

A third aspect of the invention relates to the method for performing a quench and tempering treatment on the alloyed steel of the invention comprising the following steps:
- using an austenization temperature comprising between 800°C to 1100°C,
- quenching in water or oil,
- using a tempering temperature comprising between 400°C to 650°C.

The austenization temperature range is preferably comprised between 850°C and 1100°C, and the tempering temperature is comprised between 400°C and 650°C.

An additional aspect of the invention relates to a fastener comprising the quenched and tempered steel of the invention.

Finally, another aspect of the invention relates to a foundation element of wind-driven power generators comprising the quenched and tempered steel of the invention.

### Brief Description of the Drawings

To better understand the description, a set of drawings is attached in which a practical embodiment has been schematically depicted solely by way of non-limiting example.

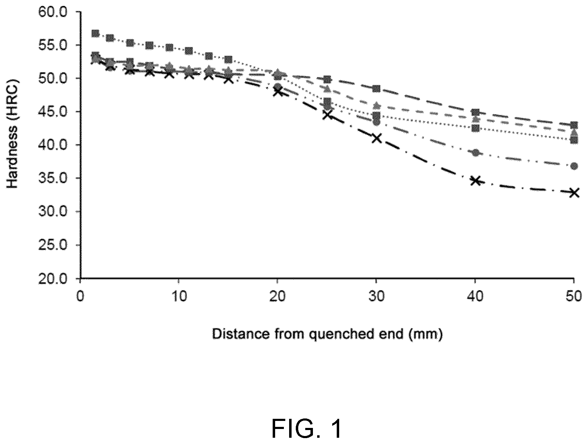

Figure 1 shows the diagram of the Jominy hardenability curves obtained for each of the steels presented in

Table 2, where: steel 32CrB4 is represented by a line drawn with a dash, circle and dot; 33MnBCr6 is represented by a line drawn with a dash, "x" and dot; 42CrNiMo6 is represented by a line drawn with a dot, square and dot; 34CrNiMo6 is represented by a line drawn with a dash, square and dash; and 32CrNiB4 is represented by a line drawn with a dash, triangle and dash.

### Embodiments of the Invention

The comparison made between the results obtained with the steels normally used in the referred application and those obtained with the steel of the invention (32CrNiB4) is described below by way of example.

Table 2 shows the chemical compositions of the steels considered:

**Table 2. Chemical composition (% by weight, except B and N in ppm) of the steels considered.**

| Steel | Steel s/ EN | C | Mn | P | S | Cr | Ni | Mo | Ti | B | N |
|---|---|---|---|---|---|---|---|---|---|---|---|
| 32CrB4 | 10263-4 | 0.32 | 0.81 | 0.012 | 0.012 | 1.13 | 0.00 | 0.00 | 0.030 | 35 | 72 |
| 33MnBCr6 | 10083-3 | 0.33 | 1.42 | 0.010 | 0.010 | 0.43 | 0.00 | 0.00 | 0.033 | 33 | 68 |
| 42CrMo4 | 10083-1 | 0.42 | 0.75 | 0.013 | 0.009 | 1.07 | 0.00 | 0.21 | 0.000 | 0 | 65 |
| 34CrNiMo6 | 10083-1 | 0.34 | 0.67 | 0.009 | 0.012 | 1.55 | 1.52 | 0.19 | 0.000 | 0 | 70 |
| 32CrNiB4 | Invention | 0.32 | 0.80 | 0.015 | 0.011 | 1.11 | 0.80 | 0.00 | 0.031 | 32 | 67 |

Figure 1 shows the diagram of the Jominy hardenability curves obtained for each of the steels presented in Table 2. The steel of the invention has a curve similar to that of 34CrNiMo6 and 42CrMo4, where said curve is flat up to 20 mm of the surface; after that point there is a slight drop in hardness observed. In the case of the less alloyed steels, 32CrB4 and 33MnBCr6, the decrease in hardness is very pronounced after a distance from the quenched end of 15 mm.

All the steels referred to in Table 2 were subjected to a quench and tempering treatment. In all cases, the heat treatment conditions were optimized for each steel for the purpose of attaining the characteristics of both class 10.9 and class 12.9 bolts, screws and studs. These heat treatments were performed on bars 75 mm in diameter.

The best results obtained for each steel after the optimized quench and tempering treatment for which the characteristics of class 10.9 bolts, screws and studs are complied with are shown in Table 3.

**Table 3. Results obtained for the class 10.9 bolts, screws and studs.**

| | Steel s/ EN standard | Strength (MPa) | KV at - 40°C (J) | Fatigue limit (MPa) |
|---|---|---|---|---|
| 32CrB4 | 10263-4 | 1072 | 25 | - |
| 33MnBCr6 | 10083-3 | 1068 | 23 | - |
| 42CrMo4 | 10083-1 | 1083 | 69 | 520 |
| 34CrNiMo6 | 10083-1 | 1090 | 78 | 550 |
| 32CrNiB4 | Invention | 1095 | 74 | 550 |

Similarly, the best results attained after the quench and tempering treatment for attaining the properties of class 12.9 bolts, screws and studs in bars 75 mm in diameter are shown in Table 4.

**Table 4. Results obtained for class 12.9 bolts, screws and studs.**

| | Steel s/ EN standard | Strength (MPa) | KV at -40°C (J) | Fatigue limit (MPa) |
|---|---|---|---|---|
| 32CrB4 | 10263-4 | 1228 | 17 | - |
| 33MnBCr6 | 10083-3 | 1230 | 15 | - |
| 42CrMo4 | 10083-1 | 1249 | 39 | 590 |
| 34CrNiMo6 | 10083-1 | 1244 | 56 | 620 |
| 32CrNiB4 | Invention | 1250 | 52 | 620 |

In the case of the two less alloyed steels, 32CrB4 and 33MnBCr6, the minimum mechanical properties required by the ISO 898-1 standard relating to bolts, screws and studs for class 10.9 and class 12.9 bolts, screws and studs are not attained in bars 75 mm in diameter.

The other three steels that were studied did meet said requirements. It can be seen how the steel of the invention allows attaining strength and low-temperature toughness values similar to those of the other two steels. Furthermore, this steel has a fatigue behavior similar to that of 34CrNiMo6 and better than that of 42CrMo4, despite having a lower alloy content.

The invention has been described according to several preferred embodiments thereof, but for the person skilled in the art it will be evident that a number of variations can be introduced in said preferred embodiments without exceeding the subject-matter of the invention that is claimed.

## Claims

1. Alloyed steel, consisting of the following elements in percentage by weight:
0.25% ≤ C ≤ 0.35%
0.80% ≤ Cr ≤ 1.50%
0.50% ≤ Ni ≤ 1.50%
0.0010% ≤ B ≤ 0.0050%
0.010% ≤ Ti ≤ 0.060%
0.40 ≤ Mn ≤ 1.00%
0.0030% ≤ N ≤ 0.0150%
and optionally at least one of the following elements in percentage by weight:
Si ≤ 0.30%
P ≤ 0.025%
S ≤ 0.025%
Cu ≤ 0.35%
Al ≤ 0.050%
Ca ≤ 0.0050%
Bi ≤ 0.10%
Pb ≤ 0.20%
Te ≤ 0.020%
Se ≤ 0.040%
balanced with iron, the remaining elements being impurities resulting from the production thereof.

2. Alloyed steel according to claim 1, **characterized in that** the following elements have the percentages by weight indicated below:
0.30% ≤ C ≤ 0.35%
0.80% ≤ Cr ≤ 1.30%
0.50% ≤ Ni ≤ 1.10%
0.0020% ≤ B ≤ 0.0050%
0.010% ≤ Ti ≤ 0.040%
0.40 ≤ Mn ≤ 1.00%
0.0030% ≤ N ≤ 0.0100%

3. Alloyed steel according to either of claims 1 and 2, **characterized in that** at least one of the following elements have the following percentages by weight:
P ≤ 0.015%
S ≤ 0.015%
Cu ≤ 0.25%
Al ≤ 0.030%

4. Quenched and tempered steel produced from the alloyed steel according to any of the preceding claims, **characterized in that** it has a mechanical strength equal to or greater than 1040 MPa, a toughness at - 40°C equal to or greater than 27 J measured with V-notch and a fatigue strength equal to or greater than 520 MPa.

5. Quenched and tempered steel according to claim 4, **characterized in that** it has a mechanical strength equal to or greater than 1240 MPa, a toughness at -40°C equal to or greater than 27 J and a fatigue strength equal to or greater than 610 MPa.

6. Method for performing a quench and tempering treatment on an alloyed steel according to any of claims 1-3, **characterized by** comprising the following steps:
- using an austenization temperature comprising between 800°C to 1100°C,
- quenching in water or oil,
- using a tempering temperature between 400°C to 650°C.

7. Method for performing a quench and tempering treatment on an alloyed steel according claim 6, **characterized by** comprising the following steps:
- using an austenization temperature comprising between 850°C to 1100°C,
- quenching in water or oil,
- using a tempering temperature between 400°C to 650°C.

8. Fastener made of the quenched and tempered steel according to claims 4 and 5.

9. Foundation element of the wind-driven power generators made of the quenched and tempered steel according to claims 4 and 5.

## Patentansprüche

1. Legierter Stahl, bestehend aus den folgenden Elementen in Gewichtsprozent:
0,25% ≤ C ≤ 0,35%
0,80% ≤ Cr ≤ 1,50%
0,50 %≤ Ni ≤ 1,50 %
0,0010% ≤ B ≤ 0,0050%
0,010% ≤ Ti ≤ 0,060%
0,40 ≤ Mn ≤ 1.00%
0,0030% ≤ N ≤ 0,0150%
und optional mindestens eines der folgenden Elemente in Gewichtsprozent:
Si ≤ 0,30 %
P ≤ 0,025%
S ≤ 0,025%
Cu ≤ 0,35%
Al ≤ 0,050%
Ca ≤ 0,0050%
Bi ≤ 0,10 %
Pb ≤ 0,20 %
Te ≤ 0,020%
Se ≤ 0,040%
mit Eisen ausgeglichen, wobei die übrigen Elemente Verunreinigungen sind, die bei der Herstellung entstehen.

2. Legierter Stahl nach Anspruch 1, **dadurch gekennzeichnet, dass** die folgenden Elemente die unten angegebenen Gewichtsprozente aufweisen:
0,30% ≤ C ≤ 0,35%
0,80 % ≤ Cr ≤ 1,30 %
0,50 % ≤ Ni ≤ 1,10 %
0,0020% ≤ B ≤ 0,0050%
0,010% ≤ Ti ≤ 0,040%
0,40 ≤ Mn ≤ 1.00%
0,0030% ≤ N ≤ 0,0100%

3. Legierter Stahl nach einem der Ansprüche 1 und 2, **dadurch gekennzeichnet, dass** mindestens eines der folgenden Elemente die folgenden Gewichtsprozente aufweist:
P ≤ 0,015%
S ≤ 0,015%
Cu ≤ 0,25 %
Al ≤ 0,030%

4. Vergütungsstahl, hergestellt aus dem legierten Stahl nach einem der vorhergehenden Ansprüche, **dadurch gekennzeichnet, dass** er eine mechanische Festigkeit gleich oder größer als 1040 MPa, eine Zähigkeit bei -40°C gleich oder größer als 27 J, gemessen mit V-Kerbe, und eine Ermüdungsfestigkeit gleich oder größer als 520 MPa hat.

5. Vergütungsstahl nach Anspruch 4, **dadurch gekennzeichnet, dass** er eine mechanische Festigkeit gleich oder größer als 1240 MPa, eine Zähigkeit bei -40°C gleich oder größer als 27 J und eine Ermüdungsfestigkeit gleich oder größer als 610 MPa hat.

6. Verfahren zur Durchführung einer Vergütungsbehandlung an einem legierten Stahl nach einem der Ansprüche 1 bis 3, **dadurch gekennzeichnet, dass** es die folgenden Schritte aufweist:
- Verwenden einer Austenitisierungstemperatur, die zwischen 800°C und 1100°C liegt,
- Abschrecken in Wasser oder Öl,
- Verwenden einer Anlasstemperatur zwischen 400°C und 650°C.

7. Verfahren zur Durchführung einer Vergütungsbehandlung an einem legierten Stahl nach Anspruch 6, **dadurch gekennzeichnet, dass** es die folgenden Schritte aufweist:
- Verwendung einer Austenitisierungstemperatur, die zwischen 850°C und 1100°C liegt,
- Abschrecken in Wasser oder Öl,
- Verwenden einer Anlasstemperatur zwischen 400°C und 650°C.

8. Befestigungselement hergestellt aus dem Vergütungsstahl nach Anspruch 4 und 5.

9. Basiselement der Windkraftgeneratoren aus dem Vergütungsstahl nach den Ansprüchen 4 und 5.

## Revendications

1. Acier allié, constitué des éléments suivants en pourcentage en poids :
0,25 % ≤ C ≤ 0,35 %
0,80 % ≤ Cr ≤ 1,50 %
0,50 % ≤ Ni ≤ 1,50%
0,0010 % ≤ B ≤ 0,0050 %
0,010 % ≤ Ti ≤ 0,060 %
0,40 % ≤ Mn ≤ 1,00 %
0,0030 % ≤ N ≤ 0,0150 %
et éventuellement au moins un des éléments suivants en pourcentage en poids :
Si ≤ 0,30 %
P ≤ 0,025 %
S ≤ 0,025 %
Cu ≤ 0,35 %
Al ≤ 0,050 %
Ca ≤ 0,0050 %
Bi ≤ 0,10 %
Pb ≤ 0,20 %
Te ≤ 0,020 %
Se ≤ 0,040 %
équilibré avec le fer, les autres éléments étant des impuretés résultant de leur production.

2. Acier allié selon la revendication 1, **caractérisé en ce que** les éléments suivants ont les pourcentages en poids indiqués ci-dessous :
0.30 % ≤ C ≤ 0.35 %
0,80 % ≤ Cr ≤ 1,30 %
0,50 % ≤ Ni ≤ 1,10%
0,0020 % ≤ B ≤ 0,0050 %
0,010 % ≤ Ti ≤ 0,040 %
0,40 % ≤ Mn ≤ 1,00 %
0,0030 % ≤ N ≤ 0,0100 %

3. Acier allié selon l'une ou l'autre des revendications 1 et 2, **caractérisé en ce qu'**au moins un des éléments suivants présente les pourcentages en poids suivants :
P ≤ 0,015 %
S ≤ 0,015 %
Cu ≤ 0,25 %
Al ≤ 0,030 %

4. Acier trempé et revenu produit à partir de l'acier allié selon l'une quelconque des revendications précédentes, **caractérisé en ce qu'**il présente une résistance mécanique égale ou supérieure à 1040 MPa, une ténacité à - 40 °C égale ou supérieure à 27 J mesurée par entaille en V et une résistance à la fatigue égale ou supérieure à 520 MPa.

5. Acier trempé et revenu selon la revendication 4, **caractérisé en ce qu'**il présente une résistance mécanique égale ou supérieure à 1240 MPa, une ténacité à -40 °C égale ou supérieure à 27 J et une résistance à la fatigue égale ou supérieure à 610 MPa.

6. Procédé pour effectuer un traitement de trempe et de revenu sur un acier allié selon l'une quelconque des revendications 1 à 3, **caractérisé en ce qu'**il comprend les étapes suivantes :
- utiliser une température d'austénisation comprise entre 800 °C et 1100 °C,
- tremper dans l'eau ou dans l'huile,
- utiliser une température de revenu comprise entre 400 °C et 650 °C.

7. Procédé pour effectuer un traitement de trempe et de revenu sur un acier allié selon la revendication 6, **caractérisé en ce qu'**il comprend les étapes suivantes consistant à :
- utiliser une température d'austénisation comprenant entre 850 °C et 1100 °C,
- tremper dans l'eau ou l'huile,
- utiliser une température de revenu comprise entre 400 °C et 650 °C

8. Fixation réalisée en acier trempé et revenu selon les revendications 4 et 5.

9. Élément de fondation des générateurs d'énergie éolienne réalisé en acier trempé et revenu selon les revendications 4 et 5.
